# EUROPEAN PATENT SPECIFICATION

(11) **EP 4 141 407 B1**
(45) Date of publication and mention of the grant of the patent: **21.10.2026**
(21) Application number: 22020140.4
(22) Date of filing: 18.02.2016
(51) Int. Cl.: G01M 17/10, B61K 9/12, G01L 1/22, G01L 5/13, G01L 5/16, G01L 25/00, G01L 5/162

(54) **CALIBRATION FRAME FOR CALIBRATION OF THE MEASURING WHEEL OR WHEELSET OF THE RAILWAY ROLLING STOCK**
KALIBRIERUNGSRAHMEN FÜR DIE KALIBRIERUNG DES MESSRADES ODER DES RADSATZES DES SCHIENENFAHRZEUGS
CADRE D'ÉTALONNAGE POUR L'ÉTALONNAGE DE LA ROUE DE MESURE OU DE L'ESSIEU DU MATÉRIEL ROULANT FERROVIAIRE

(30) Priority: 19.02.2015 CZ 20150112
(43) Date of publication of application: 01.03.2023
(62) Document number(s) of the earlier application(s) in accordance with Art. 76 EPC: 16466003.7 / 3 059 571
(73) Proprietor: VÚKV a.s., 158 00 Praha 5 (CZ)
(72) Inventor: Capek, Jan, 19800 Prague 9 (CZ); Bauer, Petr, 17000 Prague 7 (CZ); Culek, Bohumil, 53352 Stare Hradiste u Pardubic (CZ); Strnad, Ota, 16000 Prague 6 (CZ); Malinsky, Jiri, 140 00 Prague 4 (CZ)
(74) Representative: Loskotová, Jarmila

(56) References cited:
- DE-A1- 102004 021 488
- US-A- 4 800 748
- US-A1- 2012 042 720
- DRAGAN PETROVIC ET AL: "MEASURING SYSTEMS FOR TESTING THE SAFETY AND SECURITY OF RAILWAY VEHICLES", 1 January 2011 (2011-01-01), pages 20 - 28, XP055314155, Retrieved from the Internet <URL:http://www.mtc-aj.com/conf_2011/dok_577.pdf> [retrieved on 20161026]
- GIORGIO DIANA ET AL: "Challenge E: Bringing the territories closer together at higher speeds DESIGN OF A NEW FULL SCALE TEST-RIG FOR THE CALIBRATION OF INSTRUMENTED WHEELSETS", 26 May 2008 (2008-05-26), XP055314236, Retrieved from the Internet <URL:http://www.railway-research.org/IMG/pdf/e4_di_gialleonardo_egidio.pdf> [retrieved on 20161026]

## Description

### Field of technology

The invention relates to a calibration device of a measuring wheel or wheelset.

### The prior art

In the rolling stocks field, there is a requirement for measuring the tangential forces *FT* with high accuracy, for example when testing or debugging the stocks' drives.

So that it would be possible to analyze the measured deformations of the measuring wheel in order to evaluate the impact of the forces action between the wheel of the railway rolling stock and the rail it is necessary to calibrate the system first, i.e. load the measuring wheel or wheelset by a known load and from the known loading and the correspondent measured deformations derive the so-called calibration constants which are present in calculation of forces based on the measured deformations of the wheel of a moving railway rolling stock. This process is to be onwards referred to as calibration. Calibration method is crucial for the resulting accuracy of the force effects measurement.

In the current technology background only static calibration is carried out consisting of stationary measuring wheel being loaded by simple agents of various load values in several chosen positions on the circumference of the measuring wheel. This method is very work- and time consuming because between each loading it is necessary to move the loading supports or turn the measuring wheel into the proper position which consequently leads to a limited number of loads

Another disadvantage of static loading is the difference of such loading from reality of a rolling wheel being loaded during the ride down the rail.

The loading's difference from reality of a stock rolling down the rail and the limited number of loadings on the circumference of the wheel which provide data for evaluating the calibration constants are factors which negatively influence the resulting accuracy of measuring of force effects between the wheel and the rail in case of a moving railway rolling stock

Furthermore, there is a known solution according to a professional article entitled Measuring systems for testing the safety and security of railway vehicles, by Dragan Petrovic and team, where the measured/calibrated wheelset is loaded by a load wheelset, which is placed under the measured/calibrated wheelset. This solution has the following disadvantages:
- the load lower wheelset moves only laterally and is unable to change an approach angle along the vertical axis, which makes it impossible to apply a lateral force to the running surface of the calibrated wheel, outside the surrounding area
- this solution does not allow the longitudinal force to be applied to the wheels of the calibrated wheelset
- calibration of only one wheel of the wheelset is possible
- dimensions of the test stand are very large, heavy and is not portable
- dimensions of the calibrated wheelset are very limited, for example it is not possible to calibrate a wheelset with a gearbox
- it is possible to calibrate only wheelsets of one gauge track
- it is not possible to calibrate the wheelsets placed in the rolling stock

Further known solution according to the article Design of a new full scale test-rig for the calibration of instrumented wheelsets, by Giorgio Diana ET AL, where the whole wheelset is loaded again, with the same disadvantages as the solution above. Patent US 4 800 748 A describes an apparatus for the dynamic testing of wheels of rail vehicles in which a whole wheel set is loaded and rotated by the use of a driven rotating drum.

### The nature of invention

Above mentioned disadvantages are removed by the calibration frame for calibration of the measuring wheel or wheelset of the railway rolling stock, which is based on the fact that the wheelset is loaded around the wheel's circumference by external forces of known values and according to these values the electrical signal of the wheelset is calibrated. Signals of vertical, transverse as well as longitudinal forces in the contact of the wheel and the rail are calibrated. Each wheel of the wheelset is loaded by a separate roller.

This calibration frame enables calibration of wheelsets built in the rolling stock as well as wheelsets removed from the rolling stock.

In case that an integrated wheelset is being calibrated the calibration frame is placed during calibration on the rail below the stock and supports the calibrated wheelset. The calibration frame lies on the rail on four castors which enable the frame to be inserted under the rolling stock lifted up on locomotive jacks.

The calibrated wheelset is supported by brackets holding the bearing housing.

During the calibration the rotating wheelset is loaded by the rotating rail, a wheel profile roller, successively by various levels and combinations of loads by vertical, transverse and longitudinal forces.

The mobile calibration frame consists of two mirror-symmetrical main frames which are connected together by a reduction frame.

By inserting reduction frames of various widths wheelsets of various gauges can be calibrated.

In one or both main frames there is a roller built in for loading of the wheel or both wheels of the wheelset. In case the roller is built in only in one of the main frames, in the second main frame there is a friction brake of the second wheel of the wheelset which creates the tangential force acting on the calibrated wheel.

The roller is driven by an electric motor which is placed directly onto the roller's shaft. The roller's shaft is inserted between a couple of bearing housings. Reaction of the electric motor's stator is detected by the reaction rod with force-measuring insert directly into the roller's clamping frame.

The roller's clamping frame with the drive is hung up with four vertical suspensions to the cross slide table. In the suspensions force-measuring inserts are built in for measuring of vertical force. The remaining three degrees of freedom between the roller's clamping frame and the cross slide table - the movement in longitudinal direction, movement in the transverse direction and rotation around the vertical axis - are seized by two longitudinal rods and one transverse rod. The transverse rod is equipped with force-measuring insert for measuring the transverse force.

The cross slide table is inserted into the vertical slide table with four couples of linear roller guides. The system of two linear guides consists of two linear roller guides and radial axial bearing with vertical rotation axis. Linear guides in each couple are to one another in the angle 90° so that they ensure the transverse, longitudinal and rotation movement around the vertical axis. The transverse movement and the approach angle - rotation around the vertical axis - is ensured by two transverse linear drives. The longitudinal reaction forces between the cross slide table and the vertical slide table are secured by two small rollers placed on the sides of the cross slide table.

The vertical movement of the contact point between the roller and the wheel of the wheelset is carried out by tilting of the vertical slide table around the axis placed horizontally in the outer part of the main frame. The tilting shaft is embedded in two bearing housings with spherical bearings. The tilting is ensured by vertical linear drive.

The wheel's loading is measured by six force-measuring inserts.

For measuring of the tangential force a reaction moment rod of the motor is used, on the rod a force-measuring insert is placed.

The transverse force is measured by the transverse rod on which a force-measuring insert is placed.

The vertical force is measured by four force-measuring inserts which are embedded in vertical suspensions by which the roller's frame and the drive are hung to the cross slide table.

### Outline of the Figures in Drawing

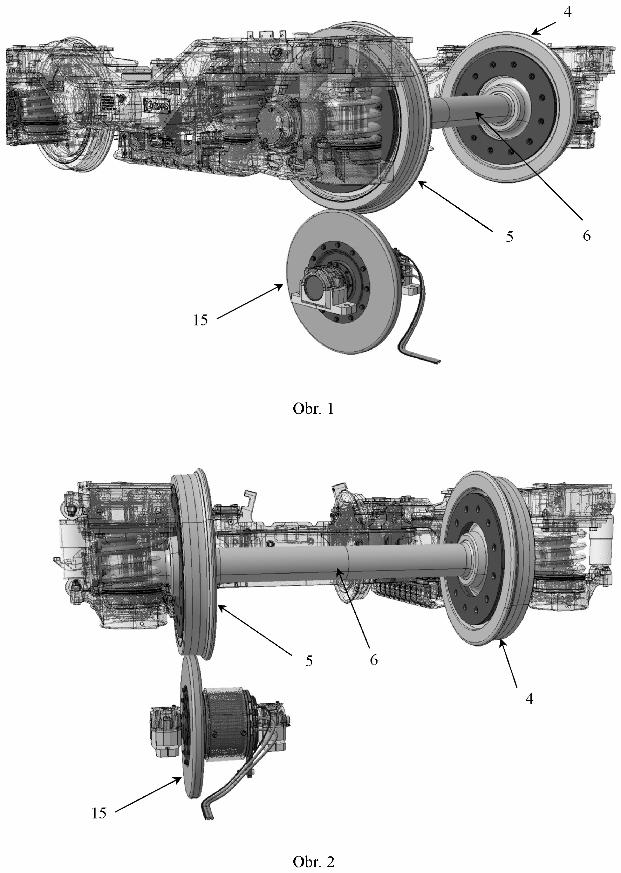

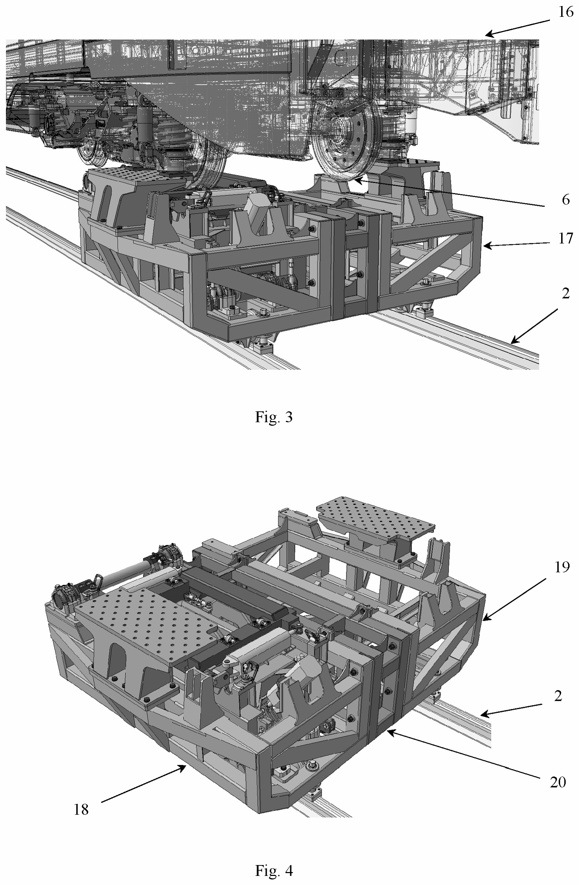

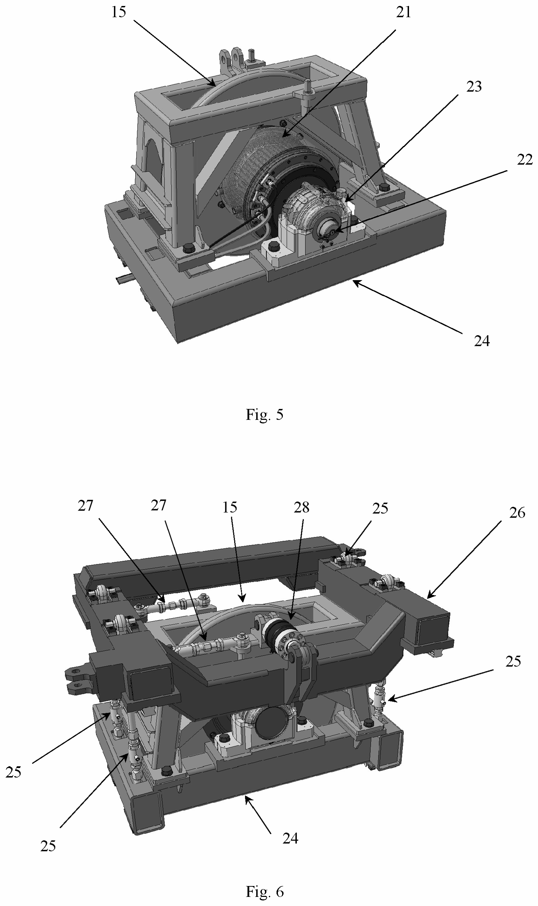

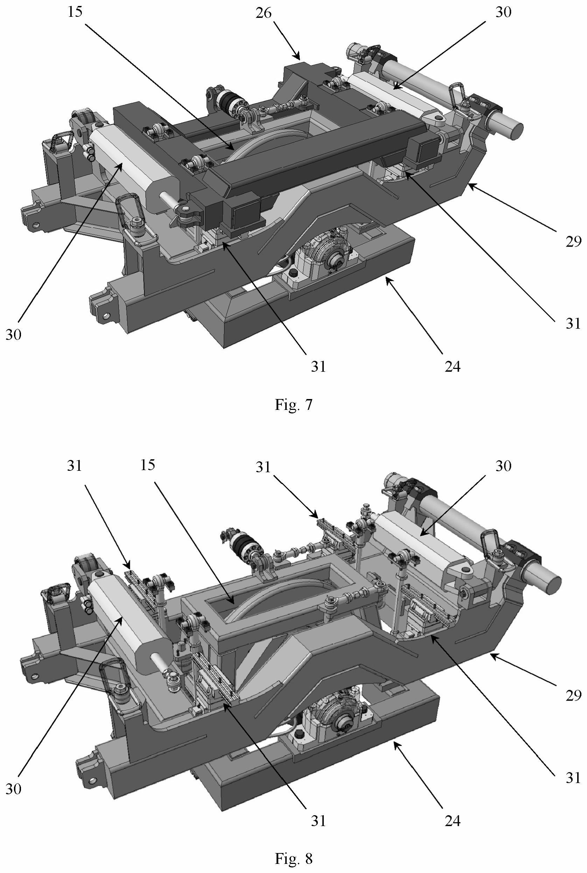

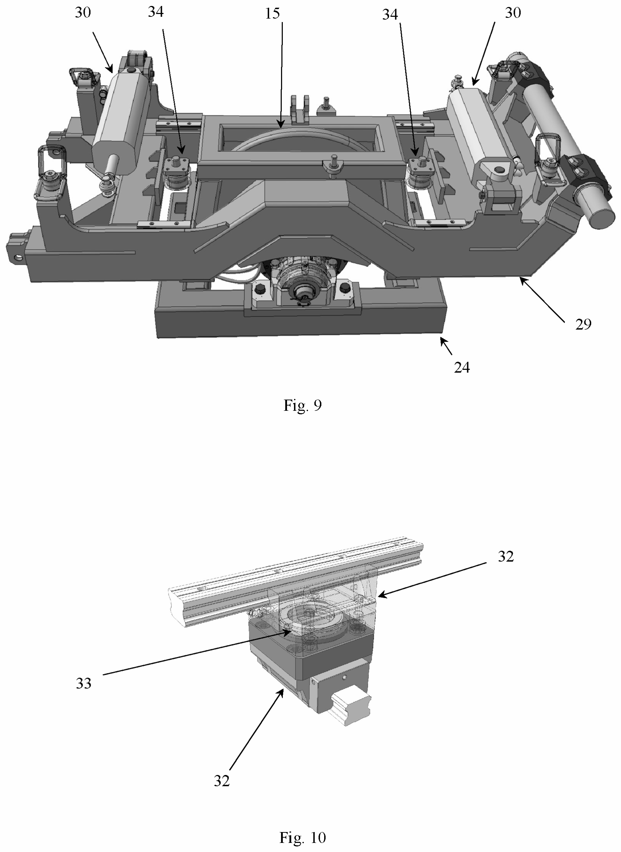

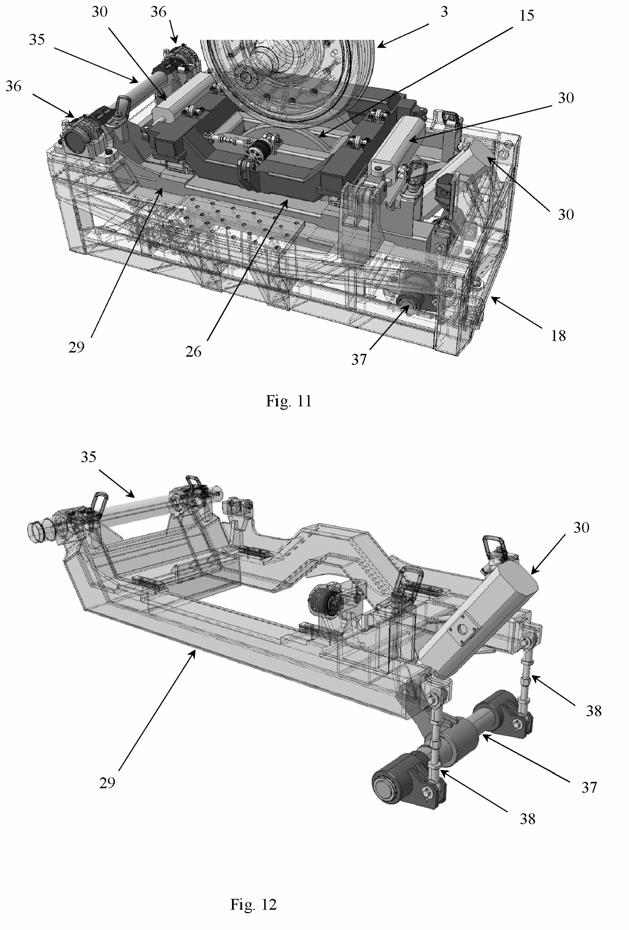

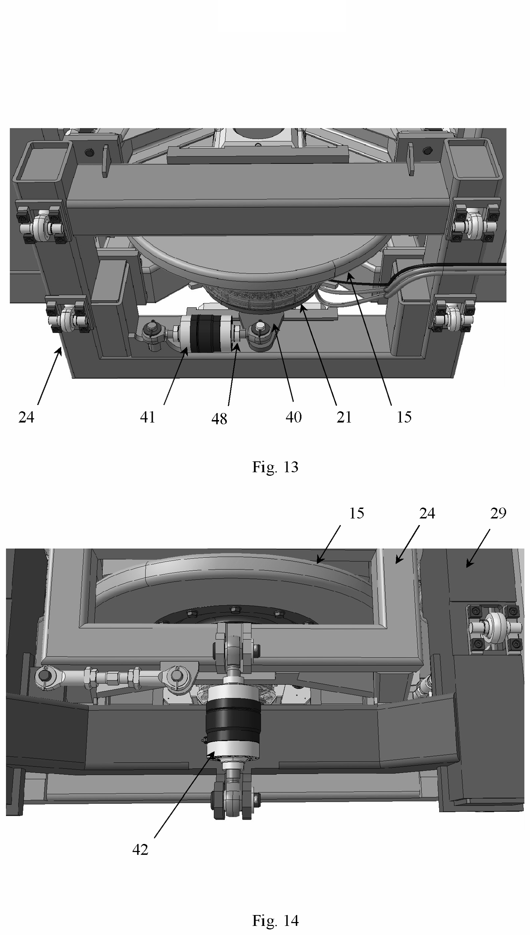

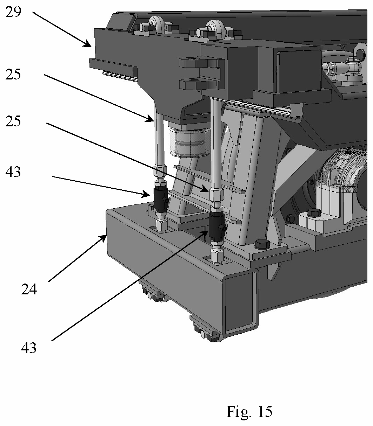

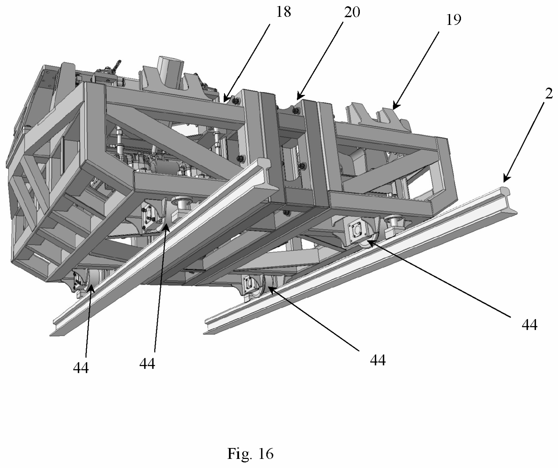

The invention is further explained by the attached figures, fig.1 and fig.2 show the spatial design the rolling stock's bogie with the wheelset which has one wheel loaded by a rotating roller, fig.3 shows spatial design of the rolling stock which has one wheelset placed on the mobile calibration frame which is placed on the rail, fig.4 shows spatially the overall view of the mobile calibration frame on the rail, fig.5 shows spatially the detail of the roller's clamping frame with motor and the roller, fig.6 shows spatially the system of the cross slide table and the hanging roller's frame, fig.7 shows spatially the system of the vertical slide table in which the cross slide table is embedded with the hanging roller's clamping frame, fig.8 shows spatially the way of embedding the cross slide table on the vertical slide table, fig.9 shows spatially the way of embedding the cross slide table into the vertical slide table in a different angle so that even the small rollers preventing the cross slide table from moving in longitudinal direction were visible, pic.10 shows spatially the detail of linear guide of the cross slide table with radial axial bearing, pic.11 shows spatially half of the calibration frame where the main frame is partly transparent so that the way of sliding of the vertical table was visible, pic. 12 shows spatially the vertical slide table with the slide mechanism, pic. 13 shows spatially the embedded insert measuring the tangential force, pic.14 shows spatially the embedded insert measuring the transverse force, pic.15 shows spatially the arrangement of inserts measuring the vertical force and pic.16 shows spatially from down below the mobile calibration frame on the rail where the castors, the main frame and the reduction frame are visible.

### Example of the invention embodiment

For calibration of the measuring system the calibration frame 17 was designed.

In this frame 17 the wheelset 6 is loaded by external forces of known values and according to these values the electrical signal of the wheelset is calibrated. Signals of vertical, transverse as well as longitudinal forces in the contact of the wheel and the rail are calibrated.

This calibration frame 17 enables calibration of wheelset 6 built in the rolling stock 16 as well as wheelset removed from the rolling stock.

In case that a wheelset 6 integrated in the rolling stock 16 is being calibrated the calibration frame 17 is placed during calibration on the rail 2 below the stock 16 and supports the calibrated wheelset 6. The calibration frame 17 lies on the rail 2 on four castors 44 which enable the frame 17 to be inserted under the stock 16 lifted up on locomotive jacks.

The calibrated wheelset 6 is in the calibration frame 17 supported by brackets holding the bearing housing.

During the calibration the rotating wheelset 6 is loaded by the rotating rail (a roller) 15 of the wheel profile successively by various levels and combinations of loads by vertical, transverse and longitudinal forces.

The mobile calibration frame 17 consists of two mirror-symmetrical main frames 18 and 19 which are connected together by reduction frame 20.

By inserting of reduction frames 20 of various widths wheelsets 6 of various gauges can be calibrated.

In one or both main frames 18, 19, there is a roller 15 built in for loading of the wheel 5 or both wheels of the wheelset 6. In case the roller 15 is built in only in one of the main frames 18, in the second main frame 19 there is friction brake of the second wheel 4 of the wheelset which creates the tangential force acting on the calibrated wheel 3.

The roller is driven by an electric motor 21 which is placed directly onto the roller's shaft 22. The roller's shaft 22 is inserted between a couple of bearing housings 23. Reaction of the electric motor's stator 40 is detected by the reaction rod 48 with force-measuring 41 insert directly into the roller's clamping frame 24.

The roller's clamping frame 24 with the drive is hung up with four vertical suspensions 25 to the cross slide table 26. In the suspensions 25 force-measuring inserts 43 are built in for measuring of vertical force. The remaining three degrees of freedom between the roller's clamping frame 24 and the cross slide table 26 - the movement in longitudinal direction, movement in the transverse direction and rotation around the vertical axis - are seized by two longitudinal rods 27 and one transverse rod 28. The transverse rod 28 is equipped with force-measuring insert 42 for measuring the transverse force.

The cross slide table 26 is inserted into the vertical slide table 29 with four couples of linear roller guides 31. The system of two linear guides 31 consists of two linear roller guides 32 and radial axial bearing 33 with vertical rotation axis. Linear guides 32 in each couple are to one another in the angle 90° so that they ensure the transverse, longitudinal and rotation movement around the vertical axis. The transverse movement and the approach angle - turning around the vertical axis - is ensured by two transverse linear drives 30. The longitudinal reaction forces between the cross slide table 26 and the vertical slide table 29 are secured by two small rollers 34 placed on the sides of the cross slide table.

The vertical movement of the contact point between the roller 15 and the wheel 5 of the wheelset is carried out by tilting of the vertical slide table 29 around the axis placed horizontally in the outer part of the main frame 18. The tilting shaft 37 is embedded in two bearing housings 39 with spherical bearings. The tilting is ensured by vertical linear drive 30.

The wheel's 5 loading is measured by six force-measuring inserts 41, 42 and 43.

For measuring of the tangential force a reaction moment rod of the motor 48, on the rod a force-measuring insert 41 is placed.

The transverse force is measured by the transverse rod 28 on which a force-measuring insert 42 is place.

The vertical force is measured by four force-measuring inserts 43 which are embedded in vertical suspensions 25 by which the roller's clamping frame 24 hung to the cross slide table 26.

### Industrial applicability

The calibration frame enabling calibration of the measuring wheel or wheelset for calibrating of transverse, vertical and longitudinal forces in the wheel-rail contact. Advantage of described frame is the possibility of calibrating the wheelset directly on the vehicle without the need to untie it. Advantage of descripted calibration frame is its mobility, which allows the calibration to be performed for example at the client's site.

## Claims

1. A calibration frame for measuring a wheel or wheelset of a rolling stock, wherein the wheel or wheelset of the rolling stock is attachable to the calibration frame, wherein the calibration frame (17) is configured to rotate within the calibration frame (17) the wheel (5) or wheelset (6) around its rotation axis; and wherein part of the calibration frame (17) is a rotating roller (15) through which the rotating wheel (5) or wheelset (6) is loaded on its circumference, wherein the loading roller (15) is influenced by a driving or braking torque of a motor (21) of the calibration frame, which is placed directly on the roller's (15) shaft (22), **characterized by** the fact that the position of the roller (15) to the loaded wheel (5) or wheelset (6) is variable in the vertical and transverse directions and in turning around its vertical axis, and wherein the calibration frame comprises four travel castors for moving the calibration frame on rails.

2. The calibration frame according to claim 1, **characterized by the fact that** the number of rollers (15) built in calibration frame (17) is two and each roller (15) loads one wheel (5), (4) of the wheelset (6).

## Patentansprüche

1. Kalibrierrahmen zum Messen eines Rades oder eines Radsatzes eines Schienenfahrzeugs, wobei das Rad oder der Radsatz des Schienenfahrzeugs an dem Kalibrierrahmen befestigbar ist, wobei
der Kalibrierrahmen (17) dazu ausgebildet ist, das Rad (5) oder den Radsatz (6) innerhalb des Kalibrierrahmens (17) um dessen Drehachse zu drehen; und wobei ein Bestandteil des Kalibrierrahmens (17) eine drehbare Rolle (15) ist, über die das sich drehende Rad (5) oder der sich drehende Radsatz (6) an seinem Umfang belastet wird, wobei die Belastungsrolle (15) mit einem Antriebs- oder Bremsmoment eines Motors (21) des Kalibrierrahmens beaufschlagt wird, der unmittelbar auf der Welle (22) der Rolle (15) angeordnet ist, **dadurch gekennzeichnet, dass** die Position der Rolle (15) relativ zu dem belasteten Rad (5) oder Radsatz (6) in vertikaler und transversaler Richtung sowie durch Drehung um ihre vertikale Achse veränderbar ist und dass der Kalibrierrahmen vier Laufrollen zum Verfahren des Kalibrierrahmens auf Schienen umfasst.

2. Kalibrierrahmen nach Anspruch 1, **dadurch gekennzeichnet, dass** zwei Rollen (15) in den Kalibrierrahmen (17) eingebaut sind und jede Rolle (15) jeweils ein Rad (5), (4) des Radsatzes (6) belastet.

## Revendications

1. Un cadre d'étalonnage destiné à la mesure d'une roue ou d'un essieu monté d'un matériel roulant, la roue ou l'essieu monté du matériel roulant pouvant être fixé au cadre d'étalonnage, dans lequel
le cadre d'étalonnage (17) est configuré pour faire tourner, à l'intérieur du cadre d'étalonnage (17), la roue (5) ou l'essieu monté (6) autour de son axe de rotation ; et dans lequel une partie du cadre d'étalonnage (17) comprend un rouleau rotatif (15) par l'intermédiaire duquel la roue (5) ou l'essieu monté (6) en rotation est chargé sur sa circonférence dans lequel le rouleau de chargement (15) étant soumis à un couple moteur ou à un couple de freinage produit par un moteur (21) du cadre d'étalonnage, qui est monté directement sur l'arbre (22) du rouleau (15), **caractérisé en ce que** la position du rouleau (15) par rapport à la roue (5) ou à l'essieu monté (6) chargé est réglable dans les directions verticale et transversale ainsi qu'en rotation autour de son axe vertical, et **en ce que** le cadre d'étalonnage comprend quatre roulettes de déplacement permettant de déplacer le cadre d'étalonnage sur des rails.

2. Le cadre d'étalonnage selon la revendication 1, **caractérisé en ce quele** nombre de rouleaux (15) intégrés au cadre d'étalonnage (17) est de deux et que chaque rouleau (15) charge une roue (5), (4) de l'essieu monté (6).
